# NEUE EUROPÄISCHE PATENTSCHRIFT

(11) **EP 1 290 364 B2**
(45) Veröffentlichungstag und Bekanntmachung des Hinweises auf die Entscheidung über den Einspruch: **27.02.2013**
(45) Hinweis auf die Patenterteilung: 16.08.2006
(21) Anmeldenummer: 01943514.8
(22) Anmeldetag: 15.06.2001
(51) Int. Cl.: F16J 15/08

(54) **FLACHDICHTUNG**
FLAT GASKET
JOINT PLAT

(30) Priorität: 15.06.2000 DE 10029403; 07.12.2000 DE 10060872
(43) Veröffentlichungstag der Anmeldung: 12.03.2003
(60) Teilanmeldung: 06008918.2
(73) Patentinhaber: REINZ-Dichtungs-GmbH, 89233 Neu-Ulm (DE)
(72) Erfinder: HÖHE, Kurt, 89129 Langenau (DE); GÜTERMANN, Armin, 89340 Leipheim (DE); UNSELD, Günther, 89189 Neenstetten (DE); EGLOFF, Georg, 89264 Weissenhorn (DE)
(74) Vertreter: Reitzle, Helmut
(86) Internationale Anmeldenummer: PCT/EP2001/006807
(87) Internationale Veröffentlichungsnummer: WO 2001/096768

(56) Entgegenhaltungen:
- EP-A- 0 942 205
- EP-A1- 0 470 790
- EP-A1- 0 940 608
- EP-A2- 0 893 630
- EP-A2- 1 111 277
- DE-A1- 4 421 219
- JP-A- 2 067 161
- JP-A- 7 041 137
- JP-A- 08 232 759
- JP-U- 7 041 137
- US-A- 4 387 904
- US-A- 4 803 965
- US-A- 5 690 343

## Beschreibung

Die Erfindung betrifft eine Flachdichtung mit mindestens einer metallischen Lage, in der jeweils mindestens eine Durchgangsöffnung ausgebildet ist. Die ein- oder auch mehrlagige Flachdichtung kann insbesondere als Zylinderkopfdichtung, aber auch für andere miteinander zu dichtende Flächen, wie die verschiedensten Flanschdichtungen ausgebildet und eingesetzt werden.

Zur Erhöhung und Absicherung der Dichtwirkung einer solchen metallischen Flachdichtung über einen längeren Zeitraum ist es üblich, um die verschiedensten Durchgangsöffnungen durch entsprechende Verformung mindestens einer der Lagen einer solchen Flachdichtung eine Sicke, die diese Durchgangsöffnung in der Regel vollständig umschließt, auszubilden.

Eine solche Sicke kann die Funktion jedoch nur so lange erfüllen, wie ein gewisses Maß an Elastizität im Sickenbereich erhalten bleibt, was in der Regel ohne zusätzliche Hilfsmittel, mit denen eine vollständige plastische Verformung verhindert wird, nicht eingehalten werden kann. Hierfür werden üblicherweise Verformungsbegrenzer für die Sicken eingesetzt. Solche Verformungsbegrenzer sind in den verschiedensten Ausführungsformen bekannt und werden üblicherweise auch als "Stopper" bezeichnet. So können Verformungsbegrenzer durch Umbiegen einer der metallischen Lagen oder von zusätzlichen Elementen erhalten werden.

In der DE 298 04 534 ist ein Beispiel eines solchen Verformungsbegrenzers in Form eines rillierten Bereiches, der in einer metallischen Lage ausgeformt ist, beschrieben. Eine solche Rillierung wird durch Kalt- oder Heißverformung in der metallischen Lage erzeugt. Die Rillierung ist dabei in Bezug zur Dicke der metallischen Lage bzw. auch unter Berücksichtigung bestimmter Einbaubedingungen einer solchen Dichtung, so dimensioniert, dass der rillierte Bereich eine entsprechende Dickenzunahme darstellt.

Mit einer solchen Rillierung als Verformungsbegrenzer ist jedoch nur eine begrenzte Einflussnahme auf gewünschte Eigenschaften erreichbar und insbesondere die Variation mit entsprechender Anpassung an die unterschiedlichsten Einsatzbedingungen, die auch an einer Flachdichtung lokal unterschiedlich sein können, ist nur bedingt und in eingeschränkter Form möglich.

Bei jedem der geeigneten Herstellungsverfahren tritt eine Veränderung des Metalls in diesem Bereich auf, unabhängig davon, ob eine Kalt- bzw. eine Heißverformung durchgeführt worden ist, was zumindest bei der Auswahl und Gestaltung des Flachmaterials für solche Flachdichtungen berücksichtigt werden muss.

Insbesondere bei der Ausbildung einer solchen Rillierung durch Pressen in das kalte Metall, tritt ein entsprechender Verschleiß am Presswerkzeug auf, so dass die kostenintensiven Werkzeuge in mehr oder weniger großen Abständen ausgetauscht werden müssen.

Außerdem können die Rillen nicht beliebig tief und mit beliebiger Dichte reproduzierbar in die metallische Lage eingebracht werden.

Die EP-A-0 940 608 A1 betrifft eine metallische Zylinderkopfdichtung mit einem integrierten Stopper. Der Stopper nach der EP 0 940 608 A1 wird dabei durch Umfalzen gebildet.

Aus der DE 44 21 219 A1 ist weiterhin eine einlagige metallische Flachdichtung mit örtlich einstellbarer Verformbarkeit bekannt. Wesentliches Element dieser Flachdichtung ist es, dass diese einstückig ausgebildet ist und an wenigstens einer Stelle Aussparungen aufweist, die einen Verdrängungsraum bilden.

In der EP 0 470 790 A1 ist ebenfalls eine metallische Flachdichtung bestehend aus mehreren Lagen beschrieben. Diese Flachdichtung besteht aus drei Lagen und weist eine mittlere Lage als Abstandshalter in Wellenform auf.

Letztlich ist aus der EP 0 942 205 A1 eine weitere metallische Flachdichtung bekannt, bei der um mindestens einen Dichtungsdurchbruch herum eine einfassende Rillierung ausgebildet ist.

Es ist daher Aufgabe der Erfindung, eine Flachdichtung mit mindestens einer metallischen Lage zur Verfügung zu stellen, die an lokal auftretende Einflüsse besser angepasst und mit dem eine solche Flachdichtung kostengünstig hergestellt werden kann.

Erfindungsgemäß wird diese Aufgabe durch eine Flachdichtung nach Anspruch 1 gelöst. Vorteilhafte Ausgestaltungsformen und Weiterbildungen der Erfindung ergeben sich mit den in den untergeordneten Ansprüchen enthaltenen Merkmalen.

Bei der erfindungsgemäßen Flachdichtung, die aus einer bzw. aber auch aus mehreren übereinander angeordneten metallischen Lagen bestehen kann, wird im Gegensatz zur bereits erwähnten, bekannten Rillierung, in der einen zumindest jedoch in einer der metallischen Lagen eine Profilierung zumindest bereichsweise um die eine oder auch mehrere Durchgangsöffnungen, insbesondere bei Durchgangsöffnungen für Brennräume in Zylinderkopfdichtungen, eingesetzt. Dabei ist eine solche Profilierung in Wellenform ausgebildet, indem diese Form in die jeweilige metallische Lage eingeprägt ist.

Der Begriff Welle bei der vorliegenden Erfindung umfasst auch Ausführungsformen, die von einer sinusförmigen Welle abweichen. Die Welle kann demnach auch in den Bergen und Tälern abgeflacht sein und z.B. gerade Flanken aufweisen. Unter dem Begriff Welle der vorliegenden Erfindung fallen auch trapezförmige Ausgestaltungen. Die Welle nach der Erfindung weist dabei eine Periodenlänge ≥ 1 auf.

Die Profilierung ist bevorzugt zumindest bereichsweise um die Durchgangsöffnung(en) herum, möglichst deren Außenkontur angepasst, ausgebildet. Idealerweise weist eine derartige Profilierung drei und mehr Wellenberge auf jeder Seite der Dichtung auf. In diesem Falle wird ein gutes Dichtverhalten auch ohne Füllung oder Beschichtung der Profilierung erzielt.

Erfindungsgemäß können jedoch die jeweiligen Wellenberge bzw. Wellentäler auch abgeflacht bzw. abgeplattet sein, wodurch sich eine besonders wirksame Auflagefläche des Stoppers auf die benachbarten Dichtungslagen ausbildet. Vorteilhafterweise sind die Höhen der Wellenberge, d.h. die Amplitude, nicht unbedingt über die gesamte Profilierung konstant, sondern können in bestimmten Umfangsbereichen um eine Durchgangsöffnung, unter Berücksichtigung der jeweiligen geometrischen Gestalt, unterschiedlich groß sein. In gleicher Weise können auch die Abstände von Wellenbergen zueinander variiert werden.

Auch können unterschiedliche Amplituden der Wellenberge und/oder unterschiedliche Abstände zwischen den einzelnen Wellenbergen sowie unterschiedliche Radien der Wellen, ausgehend mit wachsendem Abstand vom Rand der jeweiligen Durchgangsöffnung eingestellt werden, um insbesondere die Elastizität und die Federsteife gezielt lokal beeinflussen zu können. Dabei kann auch definiert eine plastische Verformung eines Bereiches einer solchen Profilierung zugelassen bzw. bereits vor dem Einbau einer solchen Flachdichtung vorgenommen werden.

Weiterhin weist erfindungsgemäß der Übergangsbereich zwischen Wellentälern und Wellenbergen eine geringere Materialdicke als die Wellenberge/-täler auf. Durch geeignete Prägung beim Herstellen der Profilierung (Flankenstauchung) lässt sich so auch die Materialdicke profilieren und die Eigenschaften der Profilierung an die jeweiligen spezifischen Bedingungen anpassen.

Nach der Erfindung ist weiter vorgesehen, eine Profilierung um die Durchgangsöffnungen auszubilden, deren Periodenlänge = 1 ist. Dies bedeutet, dass die Profilierung lediglich aus zwei Wellenbergen besteht, die in jeweils entgegengesetzte Richtungen geformt sind. Selbstverständlich kann aber auch eine größere Anzahl von Wellenbergen, vorteilhafterweise drei oder mehr, eingesetzt werden.

Die Profilierung wird als Verformungsbegrenzer für zusätzlich ausgebildete Sicken eingesetzt.

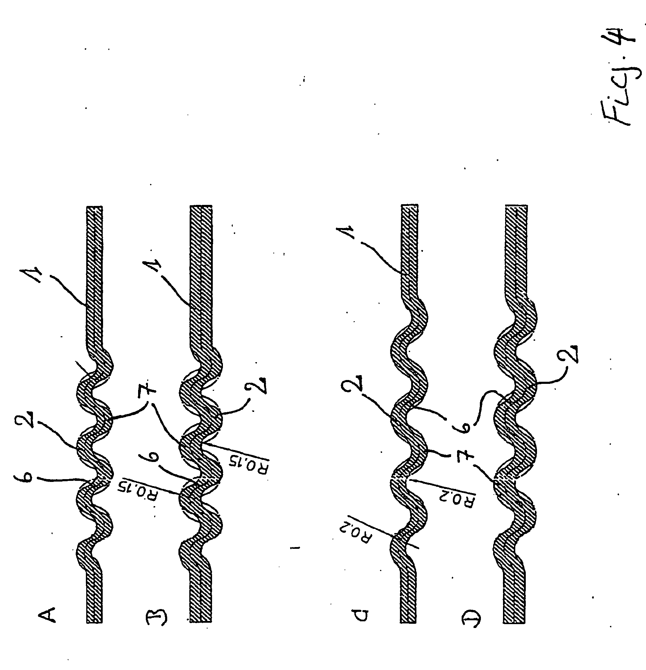

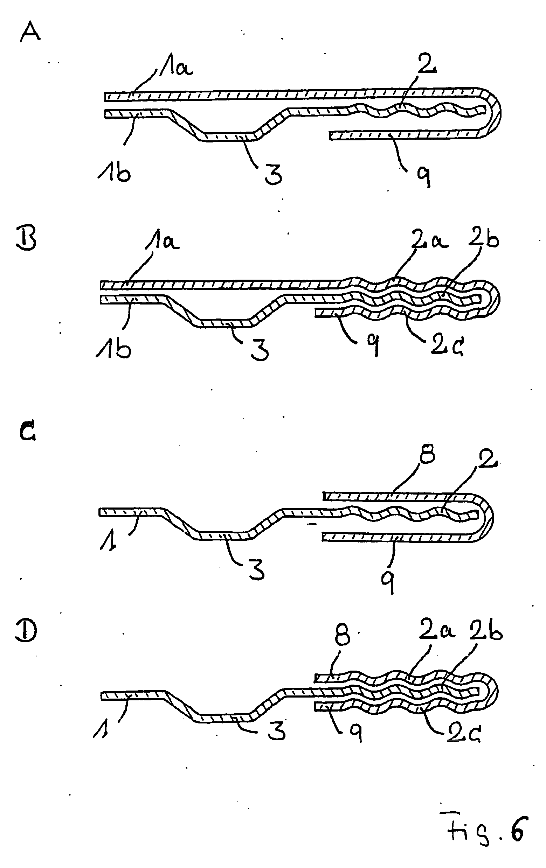

So besteht die Möglichkeit, bei einer Einlagendichtung zumindest an einer Seite einer solchen Sicke eine erfindungsgemäße Profilierung auszubilden, wobei natürlich auch die Möglichkeit einer beidseitigen Anordnung von Profilierungen gegeben ist. Bevorzugt ist die Profilierung brennraumseitig angeordnet. Die Ausbildung der Welle, d.h. die Profilhöhe (Amplitude) und der Abstand der Wellenberge (Periode), ist auf die Sicke abgestimmt. Die Profilierung, d.h. insbesondere die Amplitude der Welle, muss kleiner sein als die Ausdehnung der Sicke (siehe z.B. Figuren 4 und 6).

Die Profilierung kann aber auch bei einer Mehrlagendichtung in einer Lage und die Sicke in einer benachbarten Lage ausgebildet werden.

Erfindungsgemäß kann eine Flachdichtung auch aus mindestens zwei Metallagen bestehen, die beide eine wellenförmige Profilierung aufweisen. Diese Profilierungen können übereinander zu liegen kommen. Vorteilhafterweise sind die Profilierungen in den beiden Lagen unterschiedlich ausgelegt bezüglich der Länge, der Tiefe und/oder des Radius der jeweiligen Welle (Amplitude, Profilhöhe und Radius). Werden derartig zwei unterschiedlich ausgelegte Wellensicken direkt miteinander in Berührung im Motor auf Pressung gebracht, so ist die Relativbewegung jeder der Wellensicken abhängig von der jeweiligen Wellenstruktur. Die Differenz der Relativbewegung der beiden Profilierungen kann zur Abdichtung als elastisches Federelement mit einer hohen Spannkraft verwendet werden. So kann in einem der Bleche die Vollsicke eingespart werden und dennoch die Spannkraft einer Vollsicke übertroffen werden.

Weiterhin kann die Lage, die die Profilierung aufweist, im Bereich der Profilierung durch mindestens eine weitere Lage, z.B. einen Ring, vorteilhafterweise mit der Breite der Profilierung, verstärkt sein. Diese Lage oder dieser Ring kann die profilierte Lage auch längs des Umfangsrandes der Durchgangsöffnung zumindest bereichsweise umgreifen und dort einen sogenannten Falzstopper bilden. Die Verstärkungslage bzw. der Verstärkungsring kann dieselbe Profilierung aufweisen, und folglich können beide Profilierungen formschlüssig aneinander anliegen. Auch hier kann jedoch die Amplitude, Periode und Radius der Profilierung der Verstärkungslage bzw. des Verstärkungsringes längs des Umfangsrandes und/oder senkrecht zum Umfangsrand der Durchgangsöffnung variiert werden. Unterscheiden sich Periode, Amplitude und Radius auf verschiedenen Lagen angeordneter, benachbarter Profilierung voneinander, so kann das Dichtverhalten auf diese Weise weiter gezielt beeinflusst werden.

Der Stopper (Lage oder Ring) kann mittels frei wählbarer Schweißverfahren mit dem Wellenstopper verbunden werden. Durch diesen aufgeschweißten Stopper wird ein variabler Überstand erzielt, der gleichzeitig einen elastischen Anteil enthält. Die Wahl der Dicke des zusätzlichen Stoppers ermöglicht es, die Dichtung im Stopperbereich auf die Motorgegebenheiten abzustimmen. So können sehr hohe und robuste Konstruktionen erreicht werden, beispielsweise für Dieselmotoren auch im Lastkraftwagenbereich.

Im Gegensatz zu herkömmlichen Flachdichtungen mit Verformungsbegrenzern wird auf ein Umbiegen bzw. Umbördeln von Lagen der Flachdichtung oder zusätzlichen Elementen zur Herstellung von Verformungsbegrenzern verzichtet und demzufolge die Herstellungskosten reduziert.

Die Profilierung einer oder mehrerer Lagen kann auch durch entsprechende Gestaltung und Dimensionierung nahezu optimiert werden, indem die Elastizität, die Federsteife und auch ein gezielt gewünschtes Maß an plastischer Verformung in den unterschiedlichen Bereichen einer solchen Profilierung eingestellt wird. So ist es möglich, wie bereits eingangs angedeutet, die Abstände der einzelnen Wellenberge voneinander und/oder deren Höhen und/oder die Radien der einzelnen Wellen entsprechend zu variieren. Es kann beispielsweise auch der in Richtung auf eine Durchgangsöffnung weisende Bereich einer Profilierung kleinere Abstände der Wellenberge voneinander aufweisen, als die weiter entfernten Bereiche. In dem erstgenannten Bereich ist demzufolge die Elastizität kleiner als in den verdichteten Bereichen einer solchen Profilierung. Die Abstände und/oder Höhen können aber auch, ausgehend vom äußeren Rand einer Durchgangsöffnung sukzessive vergrößert sein.

Die verdichteten Bereiche einer Profilierung weisen eine geringere Elastizität auf und sind im Gegensatz dazu begrenzt plastisch verformbar und dieser Bereich kann dementsprechend gegebenenfalls die Funktion eines Verformungsbegrenzers mit übernehmen.

Weiterhin kann auch längs des Umfangs der Durchgangsöffnung, beispielsweise einer Zylinderbohrung, eine Variation der Zahl der Wellenberge bzw. Täler der Blechdicke, der Höhen oder Form, insbesondere der Radien der Wellenberge/-täler sowie deren Abstand und dergleichen erfolgen.

Die Metalllagen, in der die Profilierung eingebracht ist, kann auch bezüglich ihrer Ober- und Unterseite, d.h. der beiden Seiten, die in eingebautem Zustand beispielsweise den Zylinderkopf bzw. den Zylinderblock zugewandt sind, unterschiedlich gestaltet werden, z.B. bzgl. der Höhe und Form der Wellenberge/-täler und dergleichen, so dass der Stopper den unterschiedlichen Eigenschaften von beispielsweise Zylinderkopf und Zylinderblock, die aus unterschiedlichen Materialien gefertigt sein können, gerecht werden kann.

Die Lage, die die Profilierung aufweist, ist nach einer ersten Alternative aus kaltverformbarem Stahl geformt, beispielsweise einem Martensit-aushärtenden Stahl wie Zapp VACL 180T, der durch Temperierung, beispielsweise auf 300 °C, aushärtet.

Die Steifigkeit bestimmter Bereiche einer Profilierung kann auch mittels Stegen, die zwischen den einzelnen benachbarten Wellenbergen angeordnet und ausgebildet sind, erhöht werden. Solche Stege können in einer Reihen-, aber auch in versetzter Anordnung eingesetzt werden. Die Stege können aber auch lediglich in einem Bereich, der in einem größeren Abstand von der jeweiligen Durchgangsöffnung angeordnet ist, vorhanden sein.

Die erfindungsgemäß einzusetzende Profilierung ist nach einer zweiten Alternative in verschiedenen Federstahlmaterialien ausgebildet, wobei mit Federstahl eine noch höhere Elastizität und demzufolge eine Verbesserung der Dichtwirkung über einen langen Zeitraum erreicht werden kann.

Die erfindungsgemäßen Flachdichtungen können unabhängig davon, ob sie ein- oder mehrlagig hergestellt werden sollen, mit wenigen technologisch, einfach beherrschbaren Arbeitsschritten und demzufolge besonders kostengünstig hergestellt werden.

Durch die unterschiedlichsten Möglichkeiten auf die Gestaltung und Dimensionierung der Profilierung, können Eigenschaften lokal gezielt eingestellt werden.

Bei den erfindungsgemäßen Flachdichtungen tritt kein lokales Aufhärten im Metall auf. Außerdem ist ein verringerter Verzug erreichbar. Die Profilierungen können auch bei harten Federstärken ausgebildet werden.

Nachfolgend soll die Erfindung anhand von Ausführungsbeispielen näher erläutert werden.

Dabei zeigen:
- Figur 1: eine Schnittdarstellung, durch einen Teil einer erfindungsgemäßen Flachdichtung, bei der eine wellenförmige Profilierung, einen Verformungsbegrenzer für eine herkömmliche Sicke bildet;
- Figur 2: einen Teil einer Dreilagenflachdichtung, mit zwei außenliegenden gesickten Lagen und
- Figur 3: ein weiteres Beispiel einer erfindungsgemäßen Flachdichtung;
- Figur 4: vier weitere Beispiele erfindungsgemäßer einlagiger Flachdichtungen;
- Figur 5: insgesamt acht weitere Beispiele für erfindungsgemäße Flachdichtungen;
- Figur 6: vier weitere Beispiele erfindungsgemäßer Flachdichtungen;
- Fig. 7: eine Ausführungsform, bei der die Profilierung als Trapez ausgebildet ist, und

Der erfindungsgemäße Übergangsbereich zwischen Wellentälern und Wellenbergen, wobei der Übergangsbereich eine geringere Materialdicke als die Wellenberge/-täler aufweist, wird nur in der Figur 4 gezeigt.

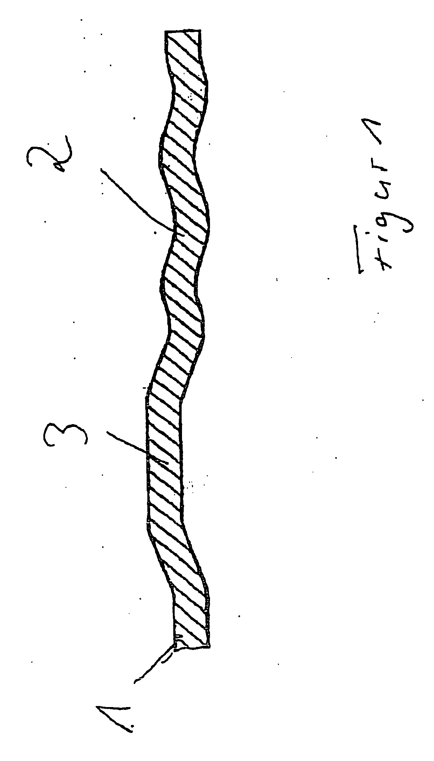

Bei dem in Figur 1 gezeigten Beispiel einer erfindungsgemäßen einlagigen Flachdichtung, ist in der metallischen Lage 1 eine Sicke 3 ausgeformt und in Richtung auf eine hier nicht dargestellte Durchgangsöffnung schließt sich eine wellenförmige Profilierung 2 an, deren Wellenberge und Wellentäler regelmäßig angeordnet und demzufolge auch die Wellenberge eine konstante Profilhöhe und konstante Abstände zueinander aufweisen. Die Profilierung 2 erfüllt in diesem Fall neben der Funktion eines Verformungsbegrenzers für die Sicke 3 auch zusätzlich durch die erreichbaren elastischen Eigenschaften, Abdichtfunktion.

Hier wie bei der Beschreibung der folgenden Figuren werden für entsprechende Elemente entsprechende Bezugszeichen verwendet.

In nicht dargestellter Form kann eine entsprechende Profilierung 2 auch auf der anderen Seite der Sicke 3 ausgebildet sein.

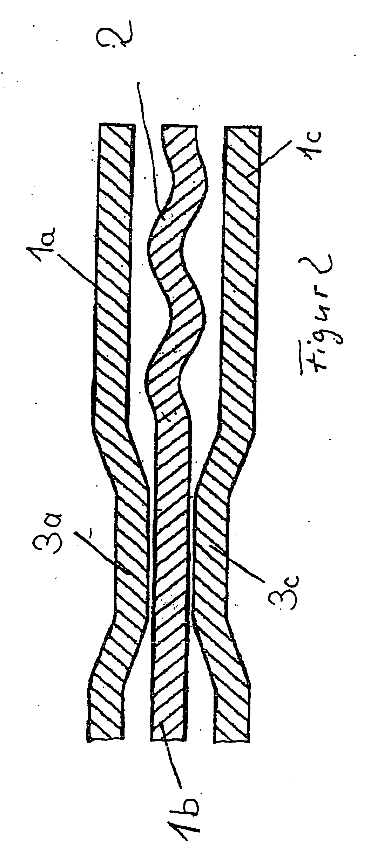

In Figur 2 ist eine dreilagige Flachdichtung gezeigt. Bei diesem Beispiel sind in den beiden außen liegenden Lagen 1' der Flachdichtung wieder Sicken 3 ausgeformt und eine ebenfalls wellenförmige Profilierung 2 ist entsprechend in der mittleren Lage 1 vorhanden. Selbstverständlich treffen die Aussagen zu Möglichkeiten der Beeinflussung von Eigenschaften, die bereits zu Figur 1 gemacht worden sind, auch auf dieses Beispiel sinngemäß zu.

Die Profilierung der in Figur 1 und 2 gezeigten Dichtung kann in ihrer Gestalt durch Verwendung eines entsprechend gestalteten und dimensionierten Prägewerkzeuges bereits bei der Ausformung erhalten werden. Es besteht aber die Möglichkeit, eine solche Gestaltung dieses Bereiches in einem zweiten technologischen Arbeitsschritt durch entsprechendes Stauchen und Drücken herzustellen.

Vorteilhaft ist es, wenn die vorab erhaltene Profilierung 2 nachfolgend vollständig oder bereichsweise planiert wird, so dass im planierten Bereich die Profilhöhe wieder reduziert wird. Hierzu können ein oder zwei Stempel mit einer ebenen parallel oder in einem Winkel schräg zur Oberfläche der metallischen Lage 1 ausgerichteten Pressflächen auf den zu planierenden Bereich gepresst werden. Beim Planieren sollte die metallische Lage 1, insbesondere an den Rändern der Profilierung 2 verspannt werden. Durch das nachfolgend durchgeführte Planieren kann die Steifigkeit und die Härte der Profilierung 2 erhöht und demzufolge auch die Standfestigkeit einer erfindungsgemäßen Flachdichtung verbessert werden.

Da bei den in den Figuren 1 und 2 gezeigten Beispielen von erfindungsgemäßen Flachdichtungen, durch die Wahl von Schnittdarstellungen darstellerische Grenzen gesetzt sind, soll darauf hingewiesen werden, dass die Profilierung über den Umfang gesehen, d.h. in verschiedenen radialen Achsen unterschiedlich gestaltet und dimensioniert sein kann. So besteht die Möglichkeit, die Anzahl der hintereinander angeordneten Wellenberge über den Umfang zu variieren und/oder eine entsprechende Veränderung der Abstände und Profilhöhen der Profilierung vorzunehmen.

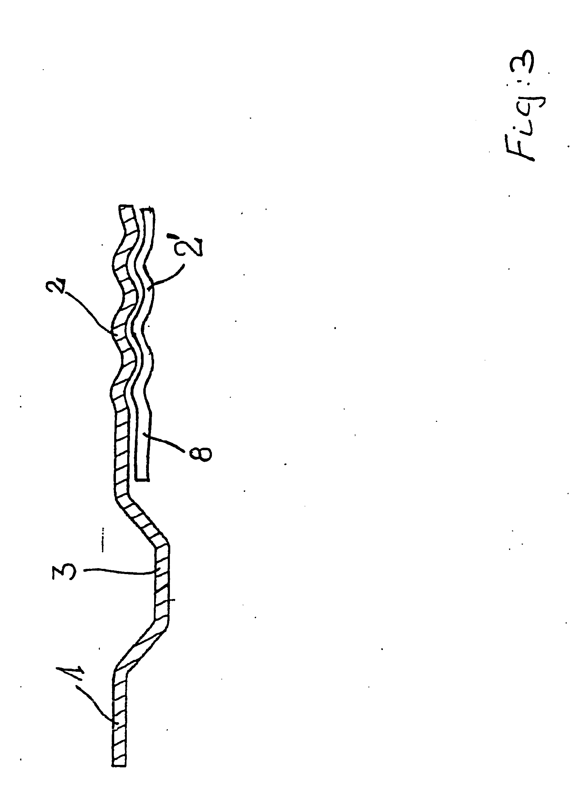

Figur 3 zeigt ein weiteres Beispiel einer einlagigen Flachdichtung mit einer einzelnen Metalllage 1, in die eine Sicke 3 eingeprägt ist. Zwischen der Sicke 3 und der rechter Hand liegenden Durchgangsöffnung ist ein wellenförmiger Stopperbereich 2 angeordnet. Dieser weist insgesamt drei Wellenberge und drei Wellentäler auf. Unterhalb dieses Stopperbereiches ist längs des Umfangsrandes der Durchgangsöffnung ein Ring 8 aufgeschweißt, der dieselbe Profilierung wie die Metalllage 1 aufweist und an dieser formschlüssig anliegt. In dem Ring 8 ist folglich ebenfalls eine Profilierung 2' mit drei Wellenbergen und drei Wellentälern ausgebildet. Mit einem derartigen zusätzlichen Stopperring 8 kann die erfindungsgemäße Flachdichtung an variable Motorgeometrien bzw. Motorverhältnisse angepaßt werden, in denen sowohl die Breite wie die Materialdicke des Metallringes 8 dementsprechend gewählt werden.

Figur 4 zeigt Ausschnitte aus vier weiteren Flachdichtungen aus jeweils einer einzigen Lage. Diese einzelne Lage kann ebenso Bestandteil einer Mehrlagendichtung sein. Die gezeigten Flachdichtungen in Figur 4A und 4C besitzen dieselbe Materialstärke, während die in den Figuren 4B und 4D gezeigten Flachdichtungen eine größere Lagendicke aufweisen. Demgegenüber besitzen die Wellen in dem Stopperbereich 2 in den Figuren 4A und 4B einen kleineren Krümmungsradius als bei den Flachdichtungen in Figuren 4C und 4D. Hier ist folglich gezeigt, dass mittels unterschiedlicher Materialdicke der Lage als auch mittels unterschiedlicher Ausformung der profilierten Bereiche 2 der Lage 1 ein großer Spielraum für Anpassungsmöglichkeiten dieses Stoppers 2 an verschiedene Motorcharakteristika gegeben sind.

Weiterhin ist bei sämtlichen in Figur 4 dargestellten profilierten Bereichen 2 jeweils die Materialstärke in einem Zwischenbereich 6 zwischen einem Wellenberg 7 und einem benachbarten Wellental 7 geringer als im Bereich der Wellentäler bzw. Wellenberge 7. Auch hierdurch kann das elastische Verhalten der Stopperbereiche 2 variiert werden.

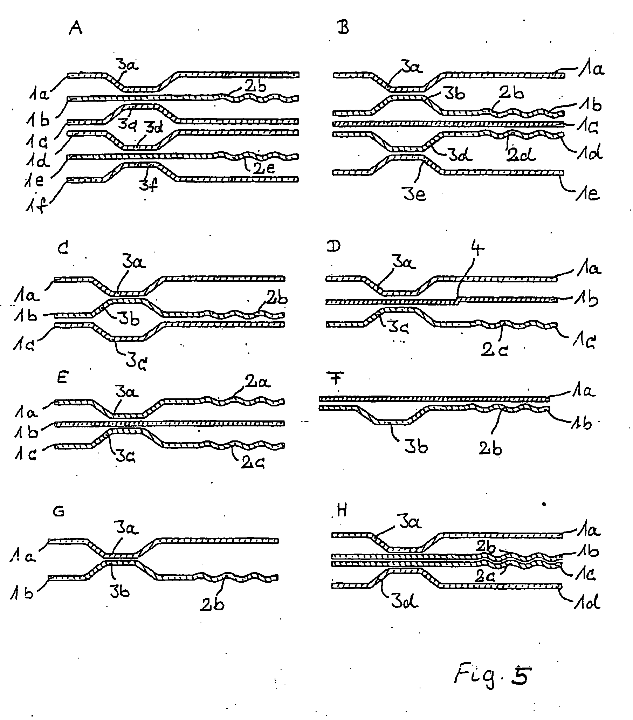

Figur 5 zeigt insgesamt acht verschiedene Varianten erfindungsgemäßer Flachdichtungen. Figur 5A zeigt eine insgesamt sechslagige Flachdichtung aus sechs Metallagen 1a bis 1f. In der Lage 1b und der Lage 1e sind jeweils zwei erfindungsgemäße profilierte Stopperbereiche 2b bzw. 2e ausgebildet, die als Verformungsbegrenzer für die in den Lagen 1a, 1c, 1d und 1f ausgebildeten Sicken 3a, 3c, 3d bzw. 3f.

In Figur 5B ist eine entsprechende fünflagige Dichtung dargestellt, bei der wiederum zwei Lagen mit profilierten Stopperbereichen versehen sind. In diesem Falle ist zwischen die beiden oberen Lagen 1a und 1b und die beiden unteren Lagen 1d und 1e eine Zwischenlage 1c eingefügt, die weder eine Sicke aufweist noch profiliert ist.

In Figuren 5C bis 5E sind dreilagige Flachdichtungen dargestellt, wobei in Figur 5D die Zwischenlage 1b eine Stufe 4 aufweist. Der Stufe 4 auf einer Seite benachbart ist ein profilierter Stopperbereich 2c, der als Stopper für die Sicke 3c fungiert. Dadurch dass in der Lage 1b ein Versatz vorgesehen ist, der dem Stopperbereich 2c abgewandt ist, wird die elastische Stopperfunktion des profilierten Bereiches 2c über die im profilierten der Lage 1c versetzte Lage 1b auch für die Sicke 3a in der Lage 1a genutzt. Figuren 5F und 5G zeigen zweilagige Flachdichtungen, bei denen in je einer der Dichtungslagen ein profilierter Bereich 2b ausgebildet ist. Dieser dient als Stopper (Verformungsbegrenzer) für die Sicken 3b in Figur 5F bzw. die Sicken 3a und 3b in Figur 5G.

Figur 5H zeigt wiederum eine vierlagige Flachdichtung, wobei in den beiden äußeren Lagen 1a und 1d je eine einander zugewandte Sicke 3a und 3d ausgebildet ist. Diese beiden äußeren Lagen 1a und 1d schließen zwei weitere Lagen 1b und 1c ein, die keine Sicke aufweisen. Sie besitzen jedoch seitlich benachbart zu den Sicken 3a und 3d gewählte Bereiche 2b und 2c, die dieselbe Profilierung aufweisen und formschlüssig aneinander liegen. Diese beiden Lagen 1b und 1c bilden durch die parallel verlaufenden profilierten Bereiche 2b und 2c in dem profilierten Bereich einen Stopper (Verformungsbegrenzer) für die Sicken 3a und 3d.

Durch diese Anordnung zweier paralleler profilierter Bereiche kann die Dichtwirkung und die Verformungsbegrenzung an die jeweiligen Gegebenheiten des abzudichtenden Motors angepasst werden.

Werden alternativ in der Dichtung gemäß Fig. 5H für die beiden Lagen 1b und 1c im Bereich der wellenförmigen Profilierungen 2b und 2c unterschiedliche Längen, Tiefen und/oder ein unterschiedlicher Radius der Wellen in den beiden Profilierungen verwendet, so ist die gestreckte Länge der beiden Profilierungen bei Verpressung im Motor für die beiden Lagen 1b und 1c unterschiedlich. Diese Differenz der Relativbewegung führt zu schmalen, ringförmigen Berührungen zwischen diesen beiden Profilierungen 2b und 2c. Eine derartige Anordnung kann zur Abdichtung als elastisches Federelement mit einer hohen Spannkraft, die die Spannkraft einer Vollsicke übertreffen kann, verwendet werden. In diesem Falle kann auch eine rein zweilagige Dichtung eingesetzt werden, wobei von den vier Dichtungslagen in Fig. 5H lediglich die beiden Dichtungslagen 1b und 1c zusammen die Dichtung bilden.

Figur 6 zeigt hier weitere Beispiele für erfindungsgemäße Flachdichtungen. Fig. 6A zeigt dabei eine Flachdichtung, die zwei metallische Lagen 1a, 1b aufweist. Die Lage 1b ist mit einer Sicke 3 versehen, an die sich unmittelbar zu der Durchführungsöffnung benachbart ein profilierter Bereich 2 anschließt. Die der Lage 1b benachbarte Lage 1a ist nicht profiliert, umgreift jedoch die Lage 1b längs des Umfangsrandes der Durchführungsöffnung und bildet so auf der entgegengesetzten Lage 1b einen Stopperring 9 aus. Damit ergibt sich die verformungsbegrenzende Stopperwirkung aus dem Zusammenwirken der Profilierung 2 mit dem Stopper 9.

In Fig. 6B ist eine entsprechende zweilagige Flachdichtung wie in Fig. 6A dargestellt. Die dem profilierten Bereich, hier mit 2B bezeichnet, der Lage 1b unmittelbar benachbarten Bereiche der Lage 1A sind in gleicher Weise mit einer Profilierung 2a bzw. 2c versehen, so dass die Lage 1a beidseitig an den profilierten Bereich 2B der Lage 1b formschlüssig anliegt.

Fig. 6C zeigt eine Anordnung wie in Fig. 6A, wobei jedoch die Lage 1a nicht als ganzflächige metallische Lage, sondern als Stopperring 8 lediglich im Bereich der Profilierung 2 der metallischen Lage 1 vorgesehen ist. Wiederum umgreift der Stopper 8 die Lage 1 längs des Umfangsrandes der Durchführungsöffnung und bildet einen zweiten Stopper 9 aus. Es handelt sich folglich um einen gefalzten Stopper.

In Fig. 6D ist in entsprechender Weise zu Fig. 6C ein gefalzter Stopperring 8, 9 dargestellt, wobei jedoch die der Profilierung, hier mit 2B bezeichnet, der Lage 1 unmittelbar benachbarten Bereiche 2A bzw. 2C des Stopper 8, 9 ebenfalls in gleicher Weise wie die Lage 1 im Profilierungsbereich 2b profiliert sind und so formschlüssig beidseitig an die Profilierung 2b anliegen. Auch hier handelt es sich folglich um einen profilierten gefalzten Stopper.

In weiteren Beispielen kann nicht nur innerhalb der Profilierung 2b sowohl die Amplitude als auch der Abstand der einzelnen Wellenberge variiert werden, entweder längs des Umfangsrandes der Durchgangsöffnung oder auch in senkrechter Richtung zum Umfangsrand der Durchgangsöffnung, sondern auch die profilierten Bereiche 2A und 2C können in gleicher Weise eine Profilierung mit unterschiedlichen Amplituden und Wellenabständen aufweisen. Insbesondere Wellenberge zwischen den einzelnen Lagen an benachbarten Stellen voneinander abweichen. So können die Profilierung 2a und 2c in den Fig. 6B und 6D an jeweils zu der Profilierung 2b benachbarten Punkten von dieser verschiedene Wellenberghöhen bzw. Wellenbergabstände aufweisen. Durch entsprechende Wahl der Amplituden und Perioden der Profilierung in den einzelnen Lagen und Stopperringen ist eine gezielte Beeinflussung der Verformungsbegrenzung und der elastischen Eigenschaften der Flachdichtung unmittelbar benachbart zu der Durchgangsöffnung möglich.

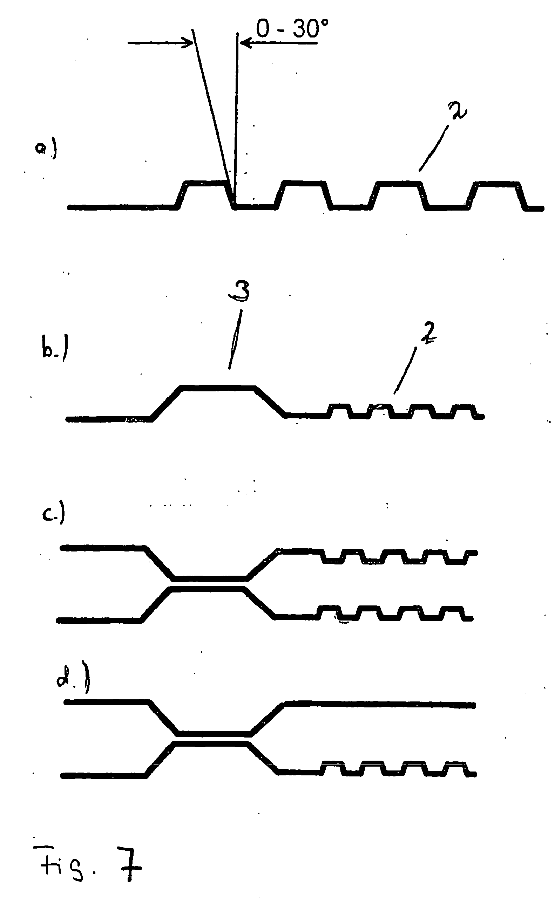

In Figur 7 ist nun eine Ausführungsform gezeigt, bei der die Profilierung 2 in Form eines Trapezes ausgebildet ist. Das Trapez besteht danach aus gleichförmigen Trapezen, die in Reihe angeordnet sind. Bei der Ausführungsform der Figur 7a ist ein Flankenwinkel vorgesehen, der zwischen 0 und 30 Grad liegen kann. Figur 7b zeigt eine weitere Ausführungsform, bei der die trapezförmige Profilierung 2 einer Sicke 3 benachbart ist. Wesentlich bei den Ausführungsformen nach den Figuren 7b und 7c und 7d ist, dass sich die Profilierung 2 in ihrer Amplitude, d.h. in der Profilhöhe, und der Abstand der Wellenberge zueinander (Periode) deutlich von der Profilierung der Sicke 3 unterscheiden. Die Profilhöhe der Profilierung ist danach die Hälfte oder weniger als die der Sicke 3.

Die Ausführungsform der Figuren 7b und 7d sind in Bezug auf die Profilierung 2 und die Sicke 3 vergleichbar ausgestaltet. Die Figur 7c zeigt eine Zweilagenvariante, wobei jede der beiden Lagen eine identische Profilierung aufweist. Dagegen ist auch eine Ausführungsform möglich, bei der nur eine der beiden aktiven Lagen - wie hier in 7d die untere Lage - die Profilierung gemäß der Erfindung zeigt.

Welche der entsprechenden Ausgestaltungen gewählt werden, hängt vom jeweiligen Einsatzzweck, d.h. von den Gegebenheiten ab, für die die Dichtung vorgesehen ist.

Ein besonderer Vorteil der erfindungsgemäßen Ausführungsformen nach der Figur 7 ist darin zu sehen, dass durch die Abflachung der Wellenberge und Wellentäler, d.h. durch die Ausbildung eines Trapezes für die Profilierung bessere Dichtverhältnisse erreicht werden, die offensichtlich darauf zurückzuführen sind, dass diese Ausführungsform zu deutlich verminderten Eingrabungen kopf- und/oder blockseitig am Zylinder führt.

## Patentansprüche

1. Flachdichtung mit mindestens einer metallischen Lage, in der mindestens eine Durchgangsöffnung ausgebildet ist,
wobei die oder zumindest eine der metallische Lagen (1) selbst, zumindest bereichsweise in Form einer wellenförmigen Profilierung (2) mit der Periodenlänge ≥ 1 um die Durchgangsöffnung(en) ausgebildet ist,
**dadurch gekennzeichnet,**
**dass** zumindest die Lage (1) in der die Profilierung (2) ausgebildet ist, aus einem Federstahl, oder aus einem kaltverformbaren, bei Temperierung aushärtenden Stahl besteht und dass die Profilierung (2) ohne Füllmaterial (2) einen Verformungsbegrenzer für eine zusätzlich ausgebildete Sicke (3) bildet, der nicht umgefalzt ist, mit der Maßgabe, dass die Amplitude der Welle kleiner ist als die Höhe der Sicke und dass der Übergangsbereich zwischen Wellentälern und Wellenbergen eine geringere Materialdicke als die Wellenberge/-täler aufweist.

2. Flachdichtung nach Anspruch 1,
**dadurch gekennzeichnet, dass** in der metallischen Lage (1), in der die Profilierung (2) ausgebildet ist, benachbart zu der Profilierung eine Sicke (3) um die Durchgangsöffnung(en) ausgebildet ist und die zumindest an einer Seite benachbart zur Sicke (3) angeordnete Profilierung (2) einen Verformungsbegrenzer für die Sicke (3) bildet.

3. Flachdichtung nach einem der vorhergehenden Ansprüche,
**dadurch gekennzeichnet, dass** in einer weiteren metallischen Lage zumindest bereichsweise eine weitere wellenförmige Profilierung mit der Periodenlänge ≥ 1, um die Durchgangsöffnung ausgebildet ist, wobei beide Profilierungen zumindest bereichsweise unmittelbar aufeinander liegend angeordnet sind.

4. Flachdichtung nach dem vorhergehenden Anspruch,
**dadurch gekennzeichnet, dass** die beiden Profilierungen unterschiedliche Abstände der Wellenberge unterschiedliche Profilhöhe (Amplitude) und/oder unterschiedliche Krümmungsradien der Wellen aufweisen.

5. Flachdichtung nach einem der vorhergehenden Ansprüche, **dadurch gekennzeichnet, dass** in einer weiteren metallischen Lage (1') mindestens eine Sicke (3) um die Durchgangsöffnung(en) ausgebildet ist und die in der benachbarten metallischen Lage (1) zumindest an einer Seite in Lagenebene benachbart zur Sicke angeordnete Profilierung (2) einen Verformungsbegrenzer für die Sicke (3) bildet.

6. Flachdichtung nach einem der vorhergehenden Ansprüche, **dadurch gekennzeichnet, dass** der Lage in der die Profilierung ausgebildet ist, eine weitere Lage benachbart ist, die in entsprechender Weise mit gleicher oder von dieser verschiedener Profilhöhe (Amplitude) und/oder Abstand der Wellenberge (Periode) profiliert ist.

7. Flachdichtung nach einem der vorhergehenden Ansprüche, **dadurch gekennzeichnet, dass** an der Lage, in der die Profilierung ausgebildet ist, im Bereich der Profilierung zumindest teilweise längs des Umfangs der Durchgangsöffnung zumindest bereichsweise ein Metallring als Stopper angeordnet ist.

8. Flachdichtung nach dem vorhergehenden Anspruch,
**dadurch gekennzeichnet, dass** der Metallring längs der Durchgangsöffnung um die metallische Lage mit Profilierung umgefalzt ist und einen bezüglich der Lage oberen und unteren Stopper bilden.

9. Flachdichtung nach einem der beiden vorhergehenden Ansprüche, **dadurch gekennzeichnet, dass** der Metallring auf einer oder beiden Seiten der metallischen Lage in entsprechender Weise mit gleicher oder von dieser verschiedener Profilhöhe (Amplitude) und/oder Abstand der Wellenberge (Periode) profiliert ist.

10. Flachdichtung nach einem der vorhergehenden Ansprüche,
**dadurch gekennzeichnet, dass** die Profilhöhe (Amplitude) und/oder die Abstände der Wellenberge innerhalb der Profilierung (2) unterschiedlich sind.

11. Flachdichtung nach einem der vorhergehenden Ansprüche, **dadurch gekennzeichnet, dass** die Wellenberge und/oder -täler abgeflacht sind.

12. Flachdichtung nach Anspruch 1,
**dadurch gekennzeichnet, dass** die Profilierung trapezförmig ist.

13. Flachdichtung nach einem der vorhergehenden Ansprüche,
**dadurch gekennzeichnet, dass** die Profilierung (2) der Welle bereichs- und/oder teilweise plastisch verformt ist.

14. Flachdichtung nach einem der vorhergehenden Ansprüche, **dadurch gekennzeichnet, dass** die Profilierung in Form einer Welle im Bereich der Flanke gestaucht ist, so dass im Vergleich zu den Wellenbergen und/oder -tälern eine Verjüngung vorhanden ist.

15. Flachdichtung nach einem der vorhergehenden Ansprüche, **dadurch gekennzeichnet, dass** die Anzahl der Wellen in unterschiedlichen Umfangsbereichen um eine Durchgangsöffnung unterschiedlich groß ist.

16. Flachdichtung nach einem der vorhergehenden Ansprüche, **dadurch gekennzeichnet, dass** die Profilhöhen und/oder die Abstände der Wellenberge der Profilierung (2) in verschiednen Umfangsbereichen um eine Durchgangsöffnung unterschiedlich groß sind.

17. Flachdichtung nach einem der vorhergehenden Ansprüche, **dadurch gekennzeichnet, dass** in Wellentälern der Profilierung Stege vorhanden sind.

18. Flachdichtung nach einem der vorhergehenden Ansprüche, **dadurch gekennzeichnet, dass** die Wellenberge und Wellentäler abgeflacht und/oder abgeplattet sind.

19. Flachdichtung nach einem der vorhergehenden Ansprüche, **dadurch gekennzeichnet, dass** der Bereich zwischen benachbarten Wellenbergen und Wellentälern eine geringere Materialdicke aufweist als die Wellenberge/-täler.

20. Flachdichtung nach einem der vorhergehenden Ansprüche, **dadurch gekennzeichnet, dass** die auf verschiedenen Seiten der Lage angeordneten Wellenberge/-täler eine unterschiedliche Formgebung, beispielsweise Höhe, Abstand, Form und dergleichen, und/oder Materialdicke aufweisen.

## Claims

1. Flat seal with at least one metallic layer wherein is formed at least one passage opening, and the metallic layer itself, or at least one of the metallic layers (1), is at least in some areas designed in the form of a wavy profile (2) with period length >= 1 around the passage opening/s,
**characterised in that** at least the layer (1) wherein the profile (2) is arranged is made of a spring steel or a cold remouldable steel which hardens when tempered, and the profile (2) forms without filler material (2) a deformation limiter for an additionally formed bead (3) which is not folded over, on condition that the amplitude of the wave is less than the height of the bead and that the transitional area between wave troughs and wave crests has a lesser material thickness than the wave crests/troughs.

2. Flat seal according to claim 1, **characterised in that** in the metallic layer (1) in which the profile (2) is formed, adjacent to the profile is arranged a bead (3) around the passage opening(s), and the profile (2) arranged on at least one side adjacent the bead (3) forms a deformation limiter for the bead (3).

3. Flat seal according to one of the above claims, **characterised in that** in a further metallic layer is established around passage opening at least in some areas a wave-shaped profile with a period length >= 1, and both profiles are arranged at least in some areas directly stacked on top of one another.

4. Flat seal according to the above claim, **characterised in that** the two profiles have different distances in the wave peaks, different profile height (amplitude) and/or different curvature radii of the waves.

5. Flat seal according to one of the above claims, **characterised in that** in a further metallic layer (1') is formed at least one bead (3) around the passage opening(s), and the profile arranged in the adjacent metallic layer (1) forms at least on one side adjacent the layer plane relative to the bead a deformation limiter for the bead (3).

6. Flat seal according to one of the above claims, **characterised in that** the layer in which the profile is formed is an adjacent additional layer which is suitably profiled with identical or therefrom differing profile height (amplitude) and/or distance of wave crests (periods).

7. Flat seal according to one of the above claims, **characterised in that** on the layer in which the profile is formed is arranged in the area of the profile at least partially alongside the periphery of the passage opening at least in some areas a metal ring serving as stopper.

8. Flat seal according to the above claim, **characterised in that** the metal ring is folded over along the passage opening around the metallic layer with profile, forming a stopper which is, relative to the layer, at the top or bottom.

9. Flat seal according to one or both of the above claims, **characterised in that** the metallic ring is on one or both sides of the metallic layer suitably profiled with differing profile height (amplitude) and/or distance of the wave crests (period).

10. Flat seal according to one of the above claims, **characterised in that** the profile height (amplitude) and/or the distances of the wave crests within the profile (2) differ.

11. Flat seal according to one of the above claims, **characterised in that** the wave crests and/or troughs are flattened.

12. Flat seal according to Claim 1, **characterised in that** the profile is trapezoidal.

13. Flat seal according to one of the above claims, **characterised in that** the profile (2) of the wave is in some areas and/or partially plastically formed.

14. Flat seal according to one of the above claims, **characterised in that** the profile is compressed in the shape of a wave in the area of the flank so that there is a narrowing relative to the wave crests and/or wave troughs.

15. Flat seal according to one of the above claims, **characterised in that** the number of waves varies in differing peripheral areas around a passage opening.

16. Flat seal according to one of the above claims, **characterised in that** the profile heights and/or the distances of the wave crests of the profile (2) differ in size in different peripheral areas around a passage opening.

17. Flat seal according to one of the above claims, **characterised in that** webs are present in wave troughs of the profile.

18. Flat seal according to one of the above claims, **characterised in that** the wave peaks and wave troughs are flattened and/or plated down.

19. Flat seal according to one of the above claims, **characterised in that** the area between adjacent wave crests and wave troughs has a lesser material thickness than the wave crests/troughs.

20. Flat seal according to one of the above claims, **characterised in that** the wave crests/troughs arranged on different sides of a layer have a different shape, for example height, distance, form and the like, and/or material thickness.

## Revendications

1. Garniture d'étanchéité plate comportant au moins une couche métallique, dans laquelle est ménagé au moins un orifice de passage,
ladite ou au moins l'une des couches métalliques (I) étant réalisée elle-même au moins par zones sous la forme d'un profilage (2) ondulatoire avec la longueur de période >= I autour du/des orifices de passage,
**caractérisée en ce qu'**au moins la couche (1), dans laquelle est réalisé le profilage (2), est constituée d'acier à ressorts ou en acier déformable à froid, durcissant par traitement thermique, et **en ce que** le profilage (2) sans matériau de remplissage (2) forme un limiteur de déformation pour une cannelure (3) réalisée de matière additionnelle, lequel limiteur n'est pas replié de sorte que l'amplitude de l'onde est inférieure à la hauteur de la cannelure et que la zone de transition entre les creux d'onde et les crêtes d'onde a une épaisseur de matériau inférieure à celle des crêtes ou des creux d'onde.

2. Garniture d'étanchéité plate selon la revendication I, **caractérisée en ce que**, dans la couche métallique (I) dans laquelle est réalisé le profilage (2), est réalisée une cannelure (3) au voisinage du profilage autour du/des orifices de passage et le profilage (2) disposé au moins sur un côté au voisinage de la cannelure (3) forme un limiteur de déformation pour la cannelure (3).

3. Garniture d'étanchéité plate selon l'une quelconque des revendications précédentes, **caractérisée en ce que**, dans une couche métallique supplémentaire est réalisée, au moins par zones, autour de l'orifice de passage un profilage ondulatoire supplémentaire avec la longueur de période >=1, les deux profilages étant disposes au moins par zones directement l'un sur l'autre.

4. Garniture d'étanchéité plate selon l'une quelconque des revendications précédentes, **caractérisée en ce que** les deux profilages présentent des distances différentes entre les crêtes d'onde, des hauteurs de profil (amplitude) différentes et/ou des rayons de courbure des ondulations différents.

5. Garniture d'étanchéité plate selon l'une quelconque des revendications précédentes, **caractérisée en ce que**, dans une couche métallique (1') supplémentaire, au moins une cannelure (3) est réalisée autour du/des orifices de passage et le profilage (2) disposé dans la couche métallique (I) adjacente au moins sur un côte, dans le plan de la couche, au voisinage de la cannelure, forme un limiteur de déformation pour la cannelure (3).

6. Garniture d'étanchéité plate selon l'une quelconque des revendications précédentes, **caractérisée en ce qu'**au voisinage de la couche dans laquelle est réalisé le profilage est disposée une couche supplémentaire, qui est profilée de manière correspondante avec une hauteur de profil (amplitude) et/ou une distance entre les crêtes d'onde (période) identiques à celle-ci ou différentes de celle-ci.

7. Garniture d'étanchéité plate selon l'une quelconque des revendications précédentes, **caractérisée en ce qu'**au niveau de la couche dans laquelle est réalisé le profilage, dans la zone du profilage, au moins en partie le long du pourtour de l'orifice de passage, est disposée au moins par zones une bague métallique formant une butée.

8. Garniture d'étanchéité plate selon la revendication précédente, **caractérisée en ce que** la bague métallique le long de l'orifice de passage est repliée autour de la couche métallique avec profilage et forme, par rapport à la couche, une butée supérieure et une butée inférieure.

9. Garniture d'étanchéité plate selon l'une des deux revendications précédentes, **caractérisée en ce que** la bague métallique est profilée sur une côté ou sur les deux côtés de la couche métallique de manière correspondant avec une hauteur de profil (amplitude) et/ou une distance entre les crêtes d'onde (période) identique à celle-ci ou différentes de celle-ci.

10. Garniture d'étanchéité plate selon l'une quelconque des revendications précédentes, **caractérisée en ce que** la hauteur du profil (amplitude) et/ou les distances entre les crêtes d'onde sont différentes à l'intérieur du profilage (2).

11. Garniture d'étanchéité plate selon l'une quelconque des revendications précédentes, **caractérisée en ce que** les crêtes et/ou les creux d'onde sont aplatis.

12. Garniture d'étanchéité plate selon la revendication I, **caractérisée en ce que** le profilage a une forme trapézoïdale.

13. Garniture d'étanchéité plate selon l'une quelconque des revendications précédentes, **caractérisée en ce que** le profilage (2) de l'ondulation subit une déformation plastique par zones et/ou partielle.

14. Garniture d'étanchéité plate selon l'une quelconque des revendications précédentes, **caractérisée en ce que** le profilage sous forme d'ondulation est écrasé dans la zone du flanc, de telle sorte qu'il se forme un amincissement par rapport aux crêtes et/ou creux d'onde.

15. Garniture d'étanchéité plate selon l'une quelconque des revendications précédentes, **caractérisée en ce que** le nombre d'ondulations est différent dans différentes zones périphériques autour d'un orifice de passage.

16. Garniture d'étanchéité plate selon l'une quelconque des revendications précédentes, **caractérisée en ce que** les hauteurs de profil et/ou les distances entre les crêtes d'onde du profilage (2) sont différentes dans différentes zones périphériques autour d'un orifice de passage.

17. Garniture d'étanchéité plate selon l'une quelconque des revendications précédentes, **caractérisée en ce que** des âmes sont prévues dans les creux d'onde du profilage.

18. Garniture d'étanchéité plate selon l'une quelconque des revendications précédentes, **caractérisée en ce que** les crêtes d'onde et les creux d'onde sont aplatis et/ou aplanis.

19. Garniture d'étanchéité plate selon l'une quelconque des revendications précédentes, **caractérisée en ce que** le matériau de la zone entre les crêtes d'onde et les creux d'onde adjacents a une épaisseur inférieure à celle des crêtes/creux d'onde.

20. Garniture d'étanchéité plate selon l'une quelconque des revendications précédentes, **caractérisée en ce que** les crêtes/creux d'onde disposés sur différents côtés de la couche, ont une configuration différente, par exemple en termes de hauteur, distance, forme et similaire, et/ou une épaisseur de matériau différente.
